# EUROPEAN PATENT SPECIFICATION

(11) **EP 4 455 642 B1**
(45) Date of publication and mention of the grant of the patent: **02.09.2026**
(21) Application number: 23853726.0
(22) Date of filing: 04.07.2023
(51) Int. Cl.: G01N 21/64, G01J 3/44, G02B 21/00

(54) **DIGITAL ADAPTIVE OPTICAL METHOD AND APPARATUS FOR MULTIPHOTON MICROSCOPY**
DIGITALES ADAPTIVES OPTISCHES VERFAHREN UND VORRICHTUNG FÜR DIE MULTIPHOTONENMIKROSKOPIE
PROCÉDÉ OPTIQUE ADAPTATIF NUMÉRIQUE ET APPAREIL DE MICROSCOPIE MULTIPHOTONIQUE

(30) Priority: 07.03.2023 CN 202310214960
(43) Date of publication of application: 30.10.2024
(73) Proprietor: Tsinghua University, Haidian District Beijing 100084 (CN)
(72) Inventor: DAI, Qionghai, Beijing 100084 (CN); ZHAO, Zhifeng, Beijing 100084 (CN); WU, Jiamin, Beijing 100084 (CN)
(74) Representative: Ipsilon
(86) International application number: PCT/CN2023/105687
(87) International publication number: WO 2024/183197

(56) References cited:
- WO-A1-2015/124648
- CN-A- 105 832 358
- CN-A- 110 954 523
- CN-A- 113 075 177
- CN-A- 113 466 190
- CN-A- 114 424 049
- CN-A- 116 338 945
- DE-A1- 102017 121 291
- US-A1- 2013 181 143
- US-A1- 2020 146 545
- ZHAO ZHIFENG ET AL: "Two-photon synthetic aperture microscopy for minimally invasive fast 3D imaging of native subcellular behaviors in deep tissue", CELL, ELSEVIER, AMSTERDAM NL, vol. 186, no. 11, 12 May 2023 (2023-05-12), pages 2475, XP087323514, ISSN: 0092-8674, [retrieved on 20230512], DOI: 10.1016/J.CELL.2023.04.016
- JANIAK F. K. ET AL: "Non-telecentric two-photon microscopy for 3D random access mesoscale imaging", vol. 13, no. 1, 27 January 2022 (2022-01-27), XP055944549, Retrieved from the Internet <URL:https://www.nature.com/articles/s41467-022-28192-0.pdf> DOI: 10.1038/s41467-022-28192-0
- HILLMAN ELIZABETH MC ET AL: "High-speed 3D imaging of cellular activity in the brain using axially-extended beams and light sheets", CURRENT OPINION IN NEUROBIOLOGY, LONDON, GB, vol. 50, 9 April 2018 (2018-04-09), pages 190 - 200, XP085403549, ISSN: 0959-4388, DOI: 10.1016/J.CONB.2018.03.007
- SEAN QUIRIN ET AL: "Simultaneous imaging of neural activity in three dimensions", FRONTIERS IN NEURAL CIRCUITS, vol. 8, 3 April 2014 (2014-04-03), XP055605124, ISSN: 1662-5110, DOI: 10.3389/fncir.2014.00029
- XIAODONG TAO ET AL: "Adaptive optical two-photon microscopy using autofluorescent guide stars", OPTICS LETTERS, OPTICAL SOCIETY OF AMERICA, US, vol. 38, no. 23, 1 December 2013 (2013-12-01), pages 5075 - 5078, XP001585938, ISSN: 0146-9592, DOI: 10.1364/OL.38.005075
- SUN, WENQIANG: "Research on the Application of Adaptive Optics in Two-photon Light-sheet Fluorescence Microscopy", THESIS, UNIVERSITY OF CHINESE ACADEMY OF SCIENCES, CHANGCHUN INSTITUTE OF OPTICS, (FINE MECHANICS AND PHYSICS, CHINSES ACADEMY OF SCIENCE, 1 June 2021 (2021-06-01), XP093208180
- SOUTH, F. A. : "Combined hardware and computational optical wavefront correction", BIOMEDICAL OPTICS EXPRESS, vol. 9, no. 6, 1 June 2018 (2018-06-01), XP093208174

## Description

### CROSS-REFERENCE TO RELATED APPLICATIONS

The present application is provided based on the Chinese patent application No. 202310214960.7 on March 07, 2023, and claims priority to the Chinese application.

### TECHNICAL FIELD

The present disclosure relates to the technical field of microscopy imaging, and particularly relates to a digital adaptive optics method and a device for multi-photon imaging.

### BACKGROUND

With the continuous development of laser technology, multi-photon microscopy is widely applied to increasing life science researches, has large penetration depth and high chromatographic capacity, and is applicable to imaging of deep scattering samples.

In related technologies, in presence of optical aberration of optical systems or tissue scattering of three-dimensional samples, image quality of the multi-photon imaging microscopy will be significantly decreased. The system aberration may be compensated through adaptive optics by measuring the aberration of the optical system during imaging.

However, in the related technologies, problems that imaging velocity of the system is decreased since an imaging environment needs to be measured in advance before acquisition of an aberration phase, the wavefront aberration compensation process depends on an active optical device, complexity of the optical system is increased, high-quality multi-photon imaging cannot be quickly realized, imaging efficiency of the optical system is decreased and practicability is lower urgently need to be solved. DE102017121291A1 discloses an optical device including an illumination module, a detection optical system and a detector, and a controller, wherein the controller is configured to actuate the illumination module for illuminating a sample object from a plurality of illumination directions; actuate the detector for capturing images, each image containing a reproduction of the specimen obtained by the detection optical system on illumination in a corresponding illumination direction; and determine at least one aberration in the detection optical system on the basis of the images.

### SUMMARY

The present disclosure provides a digital adaptive optics method and a device for multi-photon imaging, for solving problems in related technologies that imaging velocity of the system is decreased since an imaging environment needs to be measured in advance before acquisition of an aberration phase, the wavefront aberration compensation process depends on an active optical device, complexity of the optical system is increased, high-quality multi-photon imaging cannot be quickly realized, imaging efficiency of the optical system is decreased and practicability is lower.

Embodiments of the first aspect of the present disclosure provide a digital adaptive optics method for multi-photon imaging. The method includes the following steps: acquiring three-dimensional sample projection of different views based on a two-photon synthetic aperture microscopy by utilizing small-aperture excitation light beams constrained by a preset diffraction limit size aperture, and generating small-aperture imaging results of different views, wherein the two-photon synthetic aperture microscopy is configured to realize sample imaging in a process of synthesizing large apertures from sub-apertures; calculating, based on the small-aperture imaging results, lateral shift vectors produced by images of different sub-apertures caused by wavefront aberration phases brought by system aberration or tissue scattering in the imaging process, and acquiring three-dimensional sample information that meets preset resolution conditions; and compensating optical aberration according to the lateral shift vectors in a process of obtaining three-dimensional reconstruction results based on the three-dimensional sample information. The calculating, based on the small-aperture imaging results, lateral shift vectors produced by images of different sub-apertures caused by wavefront aberration phases brought by system aberration or tissue scattering in an imaging process includes: performing convolution operation on the small-aperture imaging results and an imaging point spread function to obtain forward projection *P(x, y)* of an original measuring view; performing correlation calculation on the forward projection and original measuring data *M(x, y)* to obtain a correlation matrix, wherein a maximum value of the correlation matrix is a coordinate of a maximum correlation position, and a distance of coordinates deviating from a central position is (Shift *x,* Shift *y*); and obtaining the lateral shift vectors ${S}_{x , y}^{X}$ and ${S}_{x , y}^{Y} , {S}_{x , y}^{X}$ being a shift vector of each small-aperture image on an axis X of the image, and ${S}_{x , y}^{Y}$ being a shift vector of each small-aperture image on an axis Y of the image.

Further, in one embodiment of the present disclosure, the compensating optical aberration according to the lateral shift vectors in the process of obtaining three-dimensional reconstruction results based on the three-dimensional sample information includes: applying the wavefront aberration phases determined by the lateral shift vectors to generation of a system point spread function in a preset three-dimensional reconstruction algorithm.

Specifically, in one embodiment of the present disclosure, a derivative function of the lateral shift vectors and the wavefront aberration phases meets the relationship as follows: $Δϕ = \frac{\partial ϕ}{\partial x} i + \frac{\partial ϕ}{\partial y} j = {S}_{x , y}^{X} i + {S}_{x , y}^{Y} j$
wherein *Δϕ* is an aberration phase variation; *ϕ*(x,y) is an incident light wavefront function after aberration.

Further, in one embodiment of the present disclosure, the compensating optical aberration according to the lateral shift vectors in the process of obtaining three-dimensional reconstruction results based on the three-dimensional sample information includes: compensating the lateral shift vectors in the preset three-dimensional reconstruction algorithm, and then performing the three-dimensional reconstruction.

Embodiments of the second aspect of the present disclosure provide a digital adaptive optics device for multi-photon imaging. The device includes: an acquiring module configured to acquire three-dimensional sample projection of different views based on a two-photon synthetic aperture microscopy by utilizing small-aperture excitation light beams constrained by a preset diffraction limit size aperture, and generate small-aperture imaging results of different views, wherein the two-photon synthetic aperture microscopy is configured to realize sample imaging in a process of synthesizing large apertures from sub-apertures; a calculating module configured to calculate, based on the small-aperture imaging results, lateral shift vectors produced by images of different sub-apertures caused by wavefront aberration phases brought by system aberration or tissue scattering in an imaging process, and acquire three-dimensional sample information that meets preset resolution conditions; and an imaging module configured to compensate optical aberration according to the lateral shift vectors in a process of obtaining three-dimensional reconstruction results based on the three-dimensional sample information. The calculating module is further configured to: perform convolution operation on the small-aperture imaging results and an imaging spread function to obtain forward projection *P*(*x, y*) of an original measuring view; perform correlation calculation on the forward projection and original measuring data *M(x, y)* to obtain a correlation matrix, wherein a maximum value of the correlation matrix is a coordinate of a maximum correlation position, and a distance of coordinates deviating from a central position is (Shift x, Shift y); and obtain the lateral shift vectors ${S}_{x , y}^{X}$ and ${S}_{x , y}^{Y} , {S}_{x , y}^{X}$ being a shift vector of each small-aperture image on an axis X of the image, and ${S}_{x , y}^{Y}$ being a shift vector of each small-aperture image on an axis Y of the image.

Further, in one embodiment of the present disclosure, the imaging module includes: a correction unit configured to apply the wavefront aberration phases determined by the lateral shift vectors to generation of a system point spread function in a preset three-dimensional reconstruction algorithm.

Specifically, in one embodiment of the present disclosure, a derivative function of the lateral shift vectors and the wavefront aberration phases meets the relationship as follows: $Δϕ = \frac{\partial ϕ}{\partial x} i + \frac{\partial ϕ}{\partial y} j = {S}_{x , y}^{X} i + {S}_{x , y}^{Y} j$
wherein *Δϕ* is an aberration phase variation; *ϕ*(x, y) is an incident light wavefront function after aberration.

Further, in one embodiment of the present disclosure, the imaging module includes: a compensating unit configured to compensate the lateral shift vectors in the preset three-dimensional reconstruction algorithm, and then perform the three-dimensional reconstruction.

Embodiments of the third aspect of the present disclosure provide an electronic device. The electronic device includes a memory, a processor, and a computer program stored in the memory and executed in the processor. The processor executes the program to implement the digital adaptive optics method for multi-photon imaging in the above embodiments.

Embodiments of the fourth aspect of the present disclosure provide a computer readable storage medium. A computer program is stored in the computer readable storage medium. The program is executed by a processor to implement the above digital adaptive optics method for multi-photon imaging.

In the embodiments of the present disclosure, the optical aberration of the system may be compensated according to digital adaptive optics based on the lateral shift vectors produced by various small-aperture images, and three-dimensional reconstruction of the sample information may be performed, so that multi-photon imaging of high resolution and high body imaging velocity is realized; robustness and practicability of the optical system are increased; and then imaging efficiency is higher. Therefore, the problems in related technologies that the imaging velocity of the system is decreased since the imaging environment needs to be measured in advance before acquisition of the aberration phase, the wavefront aberration compensation process depends on the active optical device, complexity of the optical system is increased, high-quality multi-photon imaging cannot be quickly realized, imaging efficiency of the optical system is decreased and practicability is lower are solved.

Additional aspects and advantages of the present disclosure will be partially described below, some of which will be obvious in descriptions below or be understood through practice of the present disclosure.

### BRIEF DESCRIPTION OF DRAWINGS

The above and/or additional aspects and advantages of the present disclosure will be obvious and easily understood in descriptions of the embodiments in combination with drawings below, wherein:
Fig. 1 is a flow chart of a digital adaptive optics method for multi-photon imaging provided by embodiments of the present disclosure;
Fig. 2 is a process diagram of image shift vectors caused by aberration calculated through digital adaptive optics in one embodiment of the present disclosure;
Fig. 3 is a using principle diagram of digital adaptive optics in one embodiment of the present disclosure;
Fig. 4 is a result map of a fluorescent globule photographed by a multi-photon microscopy applying a digital adaptive optics method in one embodiment of the present disclosure;
Fig. 5 is a result map of mouse brain slices photographed by a multi-photon microscopy applying a digital adaptive optics method in one embodiment of the present disclosure;
Fig. 6 is a process diagram of a two-photon synthetic aperture microscopy for obtaining an aberration phase from shift vectors in one embodiment of the present disclosure;
Fig. 7 is a principle diagram of producing lateral shift of sub-aperture images caused by wavefront aberration in one embodiment of the present disclosure;
Fig. 8 is a structural schematic diagram of a digital adaptive optics device for multi-photon imaging provided by embodiments of the present disclosure; and
Fig. 9 is a structural schematic diagram of an electronic device provided by embodiments of the present disclosure.

### DESCRIPTION OF EMBODIMENTS

Embodiments of the present disclosure will be described in detail below. Examples of the embodiments are illustrated in the drawings, wherein identical or similar symbols refer to identical or similar components or components having identical or similar functions throughout. Embodiments described through reference drawings below are illustrative and are intended to be used for explaining the present disclosure rather than limiting the present disclosure.

A digital adaptive optics method and a device for multi-photon imaging provided by the embodiments of the present disclosure are described below with reference to drawings. With respect to problems in related technologies mentioned in the background that imaging velocity of the system is decreased since an imaging environment needs to be measured in advance before acquisition of an aberration phase, the wavefront aberration compensation process depends on an active optical device, complexity of the optical system is increased, high-quality multi-photon imaging cannot be quickly realized, imaging efficiency of the optical system is decreased and practicability is lower, the present disclosure provides a digital adaptive optics method for multi-photon imaging. The optical aberration of the system may be compensated according to digital adaptive optics based on the lateral shift vectors produced by various small-aperture images, and three-dimensional reconstruction of the sample information may be performed, so that multi-photon imaging of high resolution and high body imaging velocity is realized; robustness and practicability of the optical system are increased; and then imaging efficiency is higher. Therefore, the problems in the related technologies that the imaging velocity of the system is decreased since the imaging environment needs to be measured in advance before acquisition of the aberration phase, the wavefront aberration compensation process depends on the active optical device, complexity of the optical system is increased, high-quality multi-photon imaging cannot be quickly realized, imaging efficiency of the optical system is decreased and practicability is lower are solved.

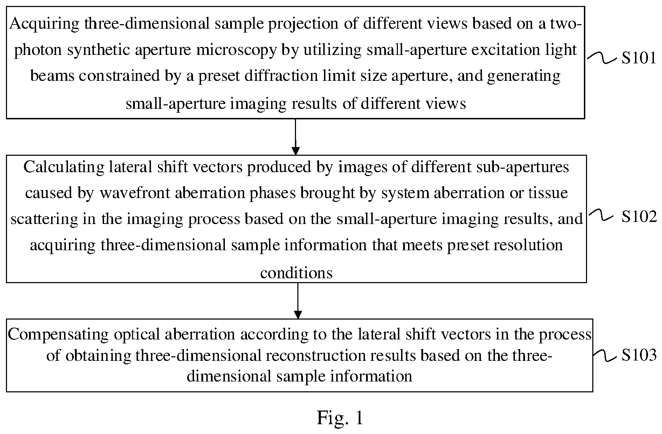

Specifically, Fig. 1 is a flow diagram of the digital adaptive optics method for multi-photon imaging provided by embodiments of the present disclosure.

As shown in Fig. 1, the digital adaptive optics method for multi-photon imaging includes the following steps:
In step S101, three-dimensional sample projection of different views is acquired based on a two-photon synthetic aperture microscopy by utilizing small-aperture excitation light beams constrained by a preset diffraction limit size aperture, and small-aperture imaging results of different views are generated.

It can be understood that, in the embodiments of the present disclosure, sample imaging may be realized by the two-photon synthetic aperture microscopy in a process of synthesizing large apertures from sub-apertures; the three-dimensional sample projection of different views may be acquired by excitation light beams by using multiple small apertures; an image generated by each small aperture is obtained by a point spread function during system imaging; and then small-aperture imaging results of different views are obtained.

It should be noted that, the preset diffraction limit size is set by those skilled in the art according to actual situations, and is not specifically defined herein.

In the embodiments of the present disclosure, the three-dimensional sample projection of different views may be acquired based on the two-photon synthetic aperture microscopy by utilizing the small-aperture excitation light beams constrained by the preset diffraction limit size aperture, and the small-aperture imaging results of different views are generated. Therefore, related imaging information is provided for further application of the digital adaptive optics in the following steps; and data basis needed by aberration correction in the multi-photon imaging process is met.

In step S102, lateral shift vectors produced by images of different sub-apertures caused by wavefront aberration phases brought by system aberration or tissue scattering in the imaging process are calculated based on the small-aperture imaging results, and three-dimensional sample information that meets preset resolution conditions is acquired.

It can be understood that, in the embodiments of the present disclosure, wavefront deformation of incident excitation light may be caused by the optical system aberration or tissue scattering, while the wavefront deformation of the incident light may cause lateral shift of images photographed with small-aperture at different positions. The lateral shift may be processed with respect to the obtained small-aperture imaging results of different views in the above steps by virtue of a three-dimensional reconstruction algorithm arranged in the two-photon synthetic aperture microscopy, thereby acquiring the three-dimensional sample information that meets preset resolution conditions.

It should be noted that, the preset resolution conditions are set by those skilled in the art according to actual situations, and are not specifically defined herein.

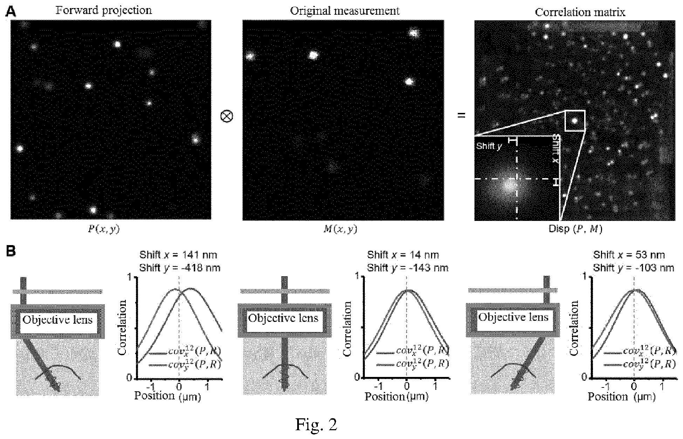

Specifically, the process of acquiring the lateral shift vectors produced by the images of different sub-apertures is shown as Fig. 2. As shown in Fig. 2(A), the obtained three-dimensional data and the imaging point spread function may be subjected to convolution operation through the three-dimensional reconstruction algorithm to obtain forward projection *P*(*x, y*) of an original measuring view; the forward projection and original measuring data *M*(*x, y*) are subjected to correlation calculation to obtain a correlation matrix; a maximum value of the correlation matrix is the coordinate of a maximum correlation position; a distance of coordinates deviating from the central position is (Shift *x,* Shift *y*); and shift vectors ${S}_{x , y}^{X}$ and ${S}_{x , y}^{Y}$ are obtained. In Fig. 2(B), when the number of the small apertures is 13, shift distance calculation results of three views and corresponding position and correlation curves are as shown in the figure.

In the embodiments of the present disclosure, the lateral shift vectors produced by the images of different sub-apertures caused by wavefront aberration phases brought by system aberration or tissue scattering in the imaging process may be calculated based on the small-aperture imaging results, and three-dimensional sample information that meets the preset resolution conditions is acquired. Therefore, data processing of the digital adaptive optics method applied to the two-photon synthetic aperture microscopy is realized; and executability of aberration correction of multi-photon imaging is increased.

In step S103, optical aberration is compensated according to the lateral shift vectors in a process of obtaining three-dimensional reconstruction results based on the three-dimensional sample information.

It can be understood that, in the embodiments of the present disclosure, photographing time during imaging does not need to be occupied in a specific implementation process of compensating the optical aberration according to the lateral shift vectors; and aberration compensation is performed during later imaging data processing, thereby further obtaining three-dimensional reconstruction results based on the three-dimensional sample information and obtaining final imaging images.

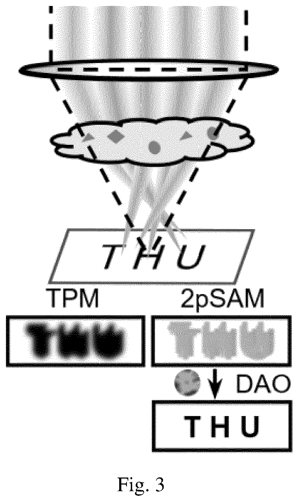

For example, Fig. 3 is a using principle diagram of digital adaptive optics in one embodiment of the present disclosure. When a traditional two-photon microscopy (TPM) encounters optical aberration or sample scattering, imaging quality is decreased. However, when small-aperture imaging results of different views are detected by the two-photon synthetic aperture microscopy (2pSAM), the images encode wavefront change characteristics in the small-aperture imaging process while penetrating through the optical aberration and scattering tissues. Therefore, high-quality high-resolution imaging images may be restored through three-dimensional reconstruction by virtue of calculation by using the digital adaptive optics (DAO) method.

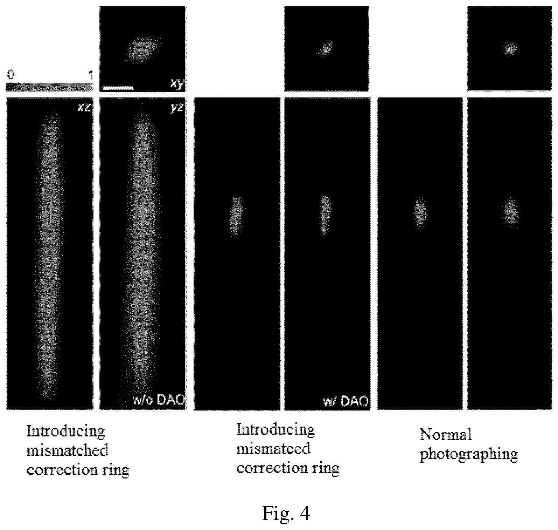

Fig. 4 is a result map of a fluorescent globule photographed by a multi-photon microscopy applying the digital adaptive optics method in one embodiment of the present disclosure. The digital adaptive optics method is applied to an imaging experiment of the fluorescent globule sample. The figure on the right shows a normal photographing result of a fluorescent globule having a diameter of 0.2 µm photographed by an ordinary two-photon microscopy. The figure on the left shows an imaging result of the two-photon microscopy after a mismatched correction ring is introduced to increase aberration of the optical system. The figure in the middle shows a final imaging result obtained in combination with the two-photon synthetic aperture microscopy for the digital adaptive optics method, and then aberration resistance of the multi-photon microscopy may be exactly increased.

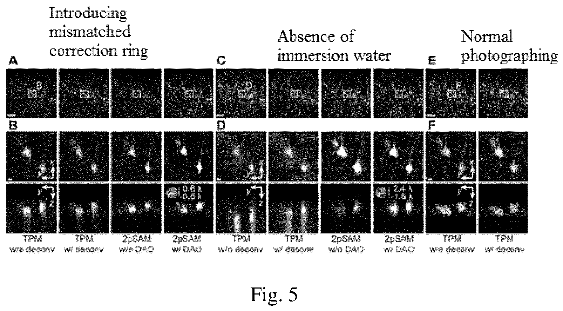

Fig. 5 is a result map of mouse brain slices photographed by the multi-photon microscopy applying the digital adaptive optics method in one embodiment of the present disclosure. The digital adaptive optics method is applied to an imaging experiment of mouse brain slice samples. Through imaging of the mouse brain slice samples of neuron expressed green fluorescent protein and multi-photon imaging under two complicated conditions that a mismatched correction ring is introduced and immersion water is not added under a water immersion objective lens, the effect of increasing aberration resistance of the microscopy in the digital adaptive optics method is measured. In Fig. 5, ordinary two-photon microscopy imaging results (TPM, w/o deconv), deconvolution of full-aperture point spread function performed on the ordinary two-photon microscopy imaging results (TPM, w/ deconv), and imaging results of the two-photon synthetic aperture microscopy without using the digital adaptive optics method (2pSAM, w/o DAO) and imaging results of the two-photon synthetic aperture microscopy using the digital adaptive optics method (2pSAM, w/ DAO) are compared. Fig. 5(E) shows an image result of the two-photon microscopy under normal photographing conditions, and the image result serving as a truth value for providing control. Figs. 5(B, D, F) are respectively partial enlarged views of Figs. 5(A, C, E). Thus, it can be seen that, image quality of the two-photon synthetic aperture microscopy in combination with the digital adaptive optics method is increased and restored; and the resolution is restored.

In the embodiments of the present disclosure, the optical aberration may be compensated according to the lateral shift vectors in the process of obtaining the three-dimensional reconstruction results based on the three-dimensional sample information. By applying the digital adaptive optics method to the two-photon synthetic aperture microscopy, the imaging velocity and imaging quality of the optical system are increased. Therefore, high-resolution multi-photon imaging results are obtained; and practicability is high.

Further, in one embodiment of the present disclosure, the compensating optical aberration according to the lateral shift vectors in the process of obtaining three-dimensional reconstruction results based on the three-dimensional sample information includes: applying the wavefront aberration phases determined by the lateral shift vectors to generation of a system point spread function in a preset three-dimensional reconstruction algorithm.

It can be understood that, in the embodiments of the present disclosure, the wavefront aberration phases may be calculated through a corresponding derivative function relationship of the lateral shift vectors and the wavefront aberration phases according to the lateral shift vectors obtained in the above step so as to regenerate a corrected point spread function during system imaging, wherein the corrected point spread function approximates the most real excitation point spread function in the imaging process. Further, the three-dimensional sample information is resolved through the three-dimensional reconstruction algorithm by using the projection of different views obtained by the original measuring data and the phase corrected point spread function, thereby obtaining final sample imaging results.

It should be noted that, the preset three-dimensional reconstruction algorithm is set by those skilled in the art according to actual situations, and is not specifically defined herein.

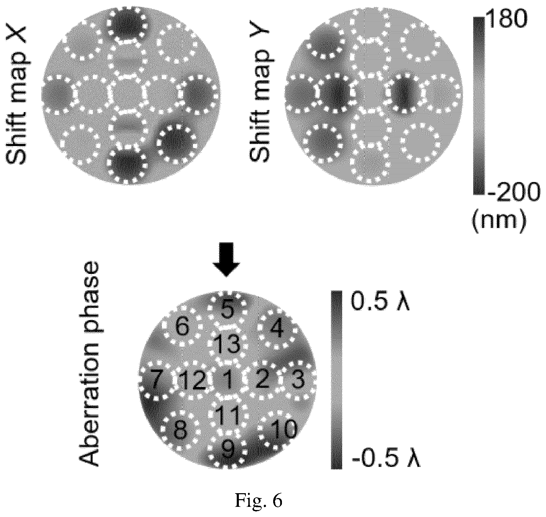

Fig. 6 is a process diagram of the two-photon synthetic aperture microscopy for obtaining an aberration phase from shift vectors in one embodiment of the present disclosure. The number of sub-apertures used by the two-photon synthetic aperture microscopy is set as 13; a shift map in the axis X and Y direction of a large aperture composed of the sub-apertures may be obtained by virtue of the shift vectors of the image of 13 sub-apertures; and specific distribution and sizes of corresponding large-aperture aberration phases may be calculated through integration by virtue of the shift map.

In the embodiments of the present disclosure, the wavefront aberration phases determined by the lateral shift vectors may be applied to generation of the system point spread function in the preset three-dimensional reconstruction algorithm. Thus, decreased image quality caused by the optical aberration is restored; and the resolution of the final imaging results is increased.

Specifically, in one embodiment of the present disclosure, a derivative function of the lateral shift vectors and the wavefront aberration phases meets the relationship as follows: $Δϕ = \frac{\partial ϕ}{\partial x} i + \frac{\partial ϕ}{\partial y} j = {S}_{x , y}^{X} i + {S}_{x , y}^{Y} j$
wherein *Δϕ* is an aberration phase variation; *ϕ*(x, y) is an incident light wavefront function after aberration; ${S}_{x , y}^{X}$ is a shift vector of each small-aperture image on an axis X of the image; and ${S}_{x , y}^{Y}$ is a shift vector of each small-aperture image on an axis Y of the image.

It can be understood that, according to the wave optics theory, translation of image information under the objective lens is a derivative function of wavefront deformation of an objective lens aperture plane, i.e., the phase of the wavefront aberration of the incident light may be solved by integrating the lateral shift vectors of the small-aperture imaging results.

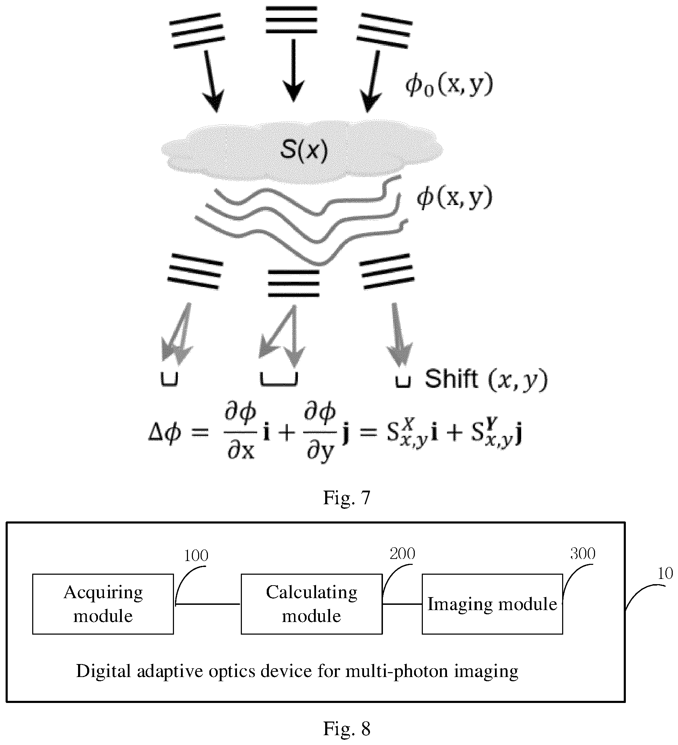

Fig. 7 is a principle diagram of producing lateral shift of sub-aperture images caused by wavefront aberration in one embodiment of the present disclosure. The incident light wavefront function is *ϕ*₀(x, y) and becomes *ϕ*(x, y) after the optical aberration of the optical system or tissue scattering of the three-dimensional sample; the various small apertures respectively correspond to different lateral shift vectors; and the corresponding derivative function of the lateral shift vectors and the wavefront aberration phases is shown as the formula in the figure.

Further, in one embodiment of the present disclosure, the compensating optical aberration according to the lateral shift vectors in the process of obtaining three-dimensional reconstruction results based on the three-dimensional sample information includes: compensating the lateral shift vectors in the preset three-dimensional reconstruction algorithm, and then performing three-dimensional reconstruction.

It can be understood that, in the embodiments of the present disclosure, according to the image shift vectors ${S}_{x , y}^{X}$ and ${S}_{x , y}^{Y}$ obtained in the above step, lateral shift of the original measuring data may be compensated in the three-dimensional reconstruction algorithm; then a subsequent three-dimensional reconstruction algorithm is continuously implemented on the compensated data; three-dimensional information of the sample is further resolved; and the shift vectors are applied to a three-dimensional reconstruction algorithm for next iteration.

In the embodiments of the present disclosure, the lateral shift vectors may be compensated in the preset three-dimensional reconstruction algorithm, and then three-dimensional reconstruction is performed, so that the resolution and quality of the images are increased. Therefore, the multi-photon imaging has higher practicability.

According to the digital adaptive optics method for multi-photon imaging provided by the embodiments of the present disclosure, the optical aberration of the system may be compensated according to digital adaptive optics based on the lateral shift vectors produced by the various small-aperture images, and three-dimensional reconstruction of the sample information may be performed, so that multi-photon imaging of high resolution and high body imaging velocity is realized; robustness and practicability of the optical system are increased; and then imaging efficiency is higher. Therefore, the problems in related technologies that the imaging velocity of the system is decreased since the imaging environment needs to be measured in advance before acquisition of the aberration phase, the wavefront aberration compensation process depends on the active optical device, complexity of the optical system is increased, high-quality multi-photon imaging cannot be quickly realized, imaging efficiency of the optical system is decreased and practicability is lower are solved.

Further, the digital adaptive optics device for multi-photon imaging provided by the embodiments of the present disclosure is described with reference to drawings.

Fig. 8 is a structural schematic diagram of the digital adaptive optics device for multi-photon imaging provided by the embodiments of the present disclosure.

As shown in Fig. 8, the digital adaptive optics device 10 for multi-photon imaging includes: an acquiring module 100, a calculating module 200 and an imaging module 300.

The acquiring module 100 is configured to acquire three-dimensional sample projection of different views based on the two-photon synthetic aperture microscopy by utilizing small-aperture excitation light beams constrained by a preset diffraction limit size aperture, and generate small-aperture imaging results of different views.

The calculating module 200 is configured to calculate, based on the small-aperture imaging results, lateral shift vectors produced by images of different sub-apertures caused by wavefront aberration phases brought by system aberration or tissue scattering in the imaging process based on the small-aperture imaging results, and acquire three-dimensional sample information that meets preset resolution conditions.

The imaging module 300 is configured to compensate optical aberration according to the lateral shift vectors in the process of obtaining three-dimensional reconstruction results based on the three-dimensional sample information.

Further, in one embodiment of the present disclosure, the imaging module 300 includes: a correction unit.

The correction unit is configured to apply the wavefront aberration phases determined by the lateral shift vectors to generation of a system point spread function in the preset three-dimensional reconstruction algorithm.

Specifically, in one embodiment of the present disclosure, a derivative function of the lateral shift vectors and the wavefront aberration phases meets the relationship as follows: $Δϕ = \frac{\partial ϕ}{\partial x} i + \frac{\partial ϕ}{\partial y} j = {S}_{x , y}^{X} i + {S}_{x , y}^{Y} j$
wherein *Δϕ* is an aberration phase variation; *ϕ*(x, y) is an incident light wavefront function after aberration; ${S}_{x , y}^{X}$ is a shift vector of each small-aperture image on an axis X of the image; and ${S}_{x , y}^{Y}$ is a shift vector of each small-aperture image on an axis Y of the image.

Further, in one embodiment of the present disclosure, the imaging module 300 includes: a compensating unit.

The compensating unit is configured to compensate the lateral shift vectors in the preset three-dimensional reconstruction algorithm, and then performing three-dimensional reconstruction.

It should be noted that, the explanation of the above digital adaptive optics method for multi-photon imaging is also applicable to the digital adaptive optics device for multi-photon imaging in the present embodiment. Unnecessary details are not given herein.

According to the digital adaptive optics device for multi-photon imaging provided by the embodiments of the present disclosure, the optical aberration of the system may be compensated according to digital adaptive optics based on the lateral shift vectors produced by various small-aperture images, and three-dimensional reconstruction of the sample information may be performed, so that multi-photon imaging of high resolution and high body imaging velocity is realized; robustness and practicability of the optical system are increased; and then imaging efficiency is higher. Therefore, the problems in the related technologies that the imaging velocity of the system is decreased since the imaging environment needs to be measured in advance before acquisition of the aberration phase, the wavefront aberration compensation process depends on the active optical device, complexity of the optical system is increased, high-quality multi-photon imaging cannot be quickly realized, imaging efficiency of the optical system is decreased and practicability is lower are solved.

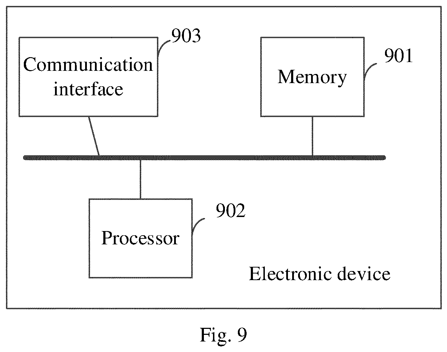

Fig. 9 is a structural schematic diagram of an electronic device provided by the embodiments of the present disclosure. The electronic device may include:
a memory 901, a processor 902, and a computer program stored in the memory 901 and executed in the processor 902.

The processor 902 executes the program to implement the digital adaptive optics method for multi-photon imaging provided in the above embodiments.

Further, the electronic device includes:
a communication interface 903 configured for communication between the memory 901 and the processor 902.

The memory 901 is configured for storing the computer program that may be executed in the processor 902.

The memory 901 may include a high-speed RAM memory and may further include a non-volatile memory, such as at least one disk memory.

If the memory 901, the processor 902 and the communication interface 903 are implemented independently, the communication interface 903, the memory 901 and the processor 902 may be connected with one another through buses and may complete communication with one another. The buses may be an industry standard architecture (ISA) bus, a peripheral component interconnect (PCI) bus or an extended industry standard architecture (EISA) bus, etc. The buses may be divided into an address bus, a data bus, a control bus and the like. For simple representation, the buses are only represented by a thick line in Fig. 9, but it does not mean that there is only one bus or one kind of bus.

Optionally, in specific implementation, if the memory 901, the processor 902 and the communication interface 903 are integrated on one chip, communication among the memory 901, the processor 902 and the communication interface 903 may be completed through an internal interface.

The processor 902 may be a central processing unit (CPU), or an application specific integrated circuit (ASIC), or be configured as one or more integrated circuits for implementing the embodiments of the present disclosure.

The present embodiment further provides a computer readable storage medium. Computer programs are stored in the computer readable storage medium. The above regional integrated energy system-oriented carbon emission flow calculation method is realized when the programs are executed by the processor.

In the illustration of this description, the illustration of reference terms "one embodiment", "some embodiments", "example", "specific example" or "some examples", etc. means that specific features, structures, materials or characteristics illustrated in combination with the embodiment or example are included in at least one embodiment or example of the present disclosure. In this description, exemplary statements for the above terms do not must aim at the same embodiment or example. Moreover, the described specific features, structures, materials or characteristics can be combined appropriately in any one or N embodiments or examples. In addition, without conflict, those skilled in the art can combine and integrate different embodiments or examples illustrated in this description and the features of different embodiments or examples.

In addition, the terms such as "first" and "second" are only used for the purpose of description, rather than being understood to indicate or imply relative importance or hint the number of indicated technical features. Thus, the features limited by "first" and "second" can explicitly or impliedly comprise at least one of the features. In the description of the present disclosure, the meaning of "N" is at least two, such as two, three, etc. unless otherwise clearly specified.

The flow chart or any procedure or method description described in any other manner herein may be understood to represent a module, a fragment or a part including one or more N codes of executable instructions in steps used for realizing customized logic functions or procedures. Moreover, the scope of preferred implementation modes of the present disclosure includes additional implementations, wherein the functions may be executed out of the illustrated or discussed sequence, including a basically simultaneous manner according to the involved functions or in reverse order, which should be understood by those skilled in the art in the embodiments of the present disclosure.

Logics and/or steps represented in the flow chart or described herein in other modes, i.e., a definite sequence table of executable instructions that may be considered to be used for realizing logic functions, may be specifically implemented in any computer readable medium to be used by instruction execution systems, apparatuses or devices (such as a computer-based system, a system including a processor, or any other system that can fetch instructions from the instruction execution system, apparatus or device and execute the instructions), or to be used in combination with these instruction execution systems, apparatuses or devices. For the present description, the "computer readable medium" may be any apparatus that may include storage, communication, propagation or transmission programs to be used by the instruction execution systems, apparatuses or devices or to be used in combination with these instruction execution systems, apparatuses or devices. More specific examples (a non-exhaustive list) of the computer readable medium include: an electrical connection part (electronic apparatus) having one or N wirings, a portable computer cassette (magnetic apparatus), a random access memory (RAM), a read-only memory (ROM), an erasable programmable read-only memory (EPROM or a flash memory), an optical fiber apparatus and a portable CD read-only memory (CDROM). In addition, the computer readable medium even may be paper on which the programs may be printed or any other appropriate medium, because the paper or any other medium may be, for example, subjected to optical scanning and then edited and interpreted or the programs are obtained electronically by processing the paper or any other medium in any other appropriate manner when necessary. Then, the programs are stored in the computer memory.

It should be understood that, various parts of the present disclosure may be implemented by hardware, software, firmware or combinations thereof. In the above implementation modes, N steps or methods may be implemented by software or firmware that is stored in the memory and executed by an appropriate instruction execution system. For example, if the implementation by hardware is the same as that in another implementation mode, the steps or methods may be implemented by any or a combination thereof in the following known technologies in the art: a discrete logic circuit having a logic gate circuit used for realizing logic functions for data signals, an application specific integrated circuit having an appropriate combinational logic gate circuit, a programmable gate array (PGA), a fieldprogrammable gate array (FPGA), etc.

Those ordinary skilled in the art may understand that, total or partial steps for realizing the method in the above embodiments may be completed by instructing associated hardware through programs. The programs may be stored in a computer readable storage medium. The programs include one of the steps in the method embodiments or a combination of the steps during execution.

In addition, various functional units in each embodiment of the present disclosure may be integrated in a processing module; each unit may also be of physical existence alone; and two or more units may also be integrated in a module. The above integrated module may be implemented in the form of hardware, and may also be implemented in the form of software function module. If implemented in the form of software function module and sold or used serving as an independent product, the integrated module may also be stored in a computer readable storage medium.

The above mentioned storage medium may be a read-only memory, a magnetic disk or a compact disc. Although the embodiments of the present disclosure have been illustrated and described above, it should be understood that, the above embodiments are illustrative and cannot be understood as a limitation to the present disclosure. Changes, modifications, replacements and transformations of the above embodiments may be made by those ordinary skilled in the art in the scope of the present disclosure.

## Claims

1. A digital adaptive optics method for multi-photon imaging, comprising acquiring (S101) three-dimensional sample projection of different views based on a two-photon synthetic aperture microscopy by utilizing small-aperture excitation light beams constrained by a preset diffraction limit size aperture, and generating small-aperture imaging results of different views, wherein the two-photon synthetic aperture microscopy is configured to realize sample imaging in a process of synthesizing large apertures from sub-apertures;
calculating (S102), based on the small-aperture imaging results, lateral shift vectors produced by images of different sub-apertures caused by wavefront aberration phases brought by system aberration or tissue scattering in an imaging process, and acquiring three-dimensional sample information that meets preset resolution conditions; and
compensating (S103), optical aberration according to the lateral shift vectors in a process of obtaining three-dimensional reconstruction results based on the three-dimensional sample information,
wherein the calculating (S102), based on the small-aperture imaging results, lateral shift vectors produced by images of different sub-apertures caused by wavefront aberration phases brought by system aberration or tissue scattering in an imaging process comprises: performing convolution operation on the small-aperture imaging results and an imaging point spread function to obtain forward projection *P(x, y)* of an original measuring view; performing correlation calculation on the forward projection and original measuring data *M*(*x, y*) to obtain a correlation matrix, wherein a maximum value of the correlation matrix is a coordinate of a maximum correlation position, and a distance of coordinates deviating from a central position is (Shift *x*, Shift *y*); and
obtaining the lateral shift vectors ${S}_{x , y}^{X}$ and ${S}_{x , y}^{Y} , {S}_{x , y}^{X}$ being a shift vector of each small-aperture image on an axis X of the image, and ${S}_{x , y}^{Y}$ being a shift vector of each small-aperture image on an axis Y of the image.

2. The method according to claim 1, wherein the compensating (S103) optical aberration according to the lateral shift vectors in the process of obtaining three-dimensional reconstruction results based on the three-dimensional sample information comprises:
applying the wavefront aberration phases determined by the lateral shift vectors to generation of a system point spread function in a preset three-dimensional reconstruction algorithm.

3. The method according to claim 2, wherein a derivative function of the lateral shift vectors and the wavefront aberration phases meets the relationship as follows: $Δϕ = \frac{\partial ϕ}{\partial x} i + \frac{\partial ϕ}{\partial y} j = {S}_{x , y}^{X} i + {S}_{x , y}^{Y} j$ wherein *Δϕ* is an aberration phase variation; *ϕ*(x, y) is an incident light wavefront function after aberration

4. The method according to claim 1, wherein the compensating (S103) optical aberration according to the lateral shift vectors in the process of obtaining three-dimensional reconstruction results based on the three-dimensional sample information comprises:
compensating the lateral shift vectors in the preset three-dimensional reconstruction algorithm, and then performing the three-dimensional reconstruction.

5. A digital adaptive optics device (10) for multi-photon imaging, comprising:
an acquiring module (100) configured to acquire three-dimensional sample projection of different views based on a two-photon synthetic aperture microscopy by utilizing small-aperture excitation light beams constrained by a preset diffraction limit size aperture, and generate small-aperture imaging results of different views, wherein the two-photon synthetic aperture microscopy is configured to realize sample imaging in a process of synthesizing large apertures from sub-apertures;
a calculating module (200) configured to calculate, based on the small-aperture imaging resultslateral shift vectors produced by images of different sub-apertures caused by wavefront aberration phases brought by system aberration or tissue scattering in an imaging process, and acquire three-dimensional sample information that meets preset resolution conditions; and
an imaging module (300) configured to compensate optical aberration according to the lateral shift vectors in a process of obtaining three-dimensional reconstruction results based on the three-dimensional sample information,
wherein the calculating module (200) is further configured to:
perform convolution operation on the small-aperture imaging results and an imaging spread function to obtain forward projection *P*(*x, y*) of an original measuring view;
perform correlation calculation on the forward projection and original measuring data *M*(*x, y*) to obtain a correlation matrix, wherein a maximum value of the correlation matrix is a coordinate of a maximum correlation position, and a distance of coordinates deviating from a central position is (Shift x, Shift y); and
obtain the lateral shift vectors ${S}_{x , y}^{X}$ and ${S}_{x , y}^{Y} , {S}_{x , y}^{X}$ being a shift vector of each small-aperture image on an axis X of the image, and ${S}_{x , y}^{Y}$ being a shift vector of each small-aperture image on an axis Y of the image.

6. The device (10) according to claim 5, wherein the imaging module (300) comprises:
a correction unit configured to apply the wavefront aberration phases determined by the lateral shift vectors to generation of a system point spread function in a preset three-dimensional reconstruction algorithm.

7. The device (10) according to claim 6, wherein a derivative function of the lateral shift vectors and the wavefront aberration phases meets the relationship as follows: $Δϕ = \frac{\partial ϕ}{\partial x} i + \frac{\partial ϕ}{\partial y} j = {S}_{x , y}^{X} i + {S}_{x , y}^{Y} j$ wherein *Δϕ* is an aberration phase variation; *ϕ*(x, y) is an incident light wavefront function after aberration

8. The device (10) according to claim 5, wherein the imaging module (300) comprises:
a compensating unit configured to compensate the lateral shift vectors in the preset three-dimensional reconstruction algorithm, and then performing the three-dimensional reconstruction.

9. An electronic apparatus for a device according to claims 5-8, comprising: a memory (901), a processor (902), and a computer program stored in the memory (901) and executed in the processor (902), wherein the processor (902) executes the program to implement the digital adaptive optics method for multi-photon imaging according to any one of claims 1-4.

10. A computer readable storage medium, storing a computer program, wherein the program is executed by the processor of an electronic device of claim 9 to implement the digital adaptive optics method for multi-photon imaging according to any one of claims 1-4.

## Patentansprüche

1. Verfahren der digitalen adaptiven Optik zur Mehrphotonen-Bildgebung, umfassend:
Erfassen (S101) dreidimensionaler Probenprojektionen unterschiedlicher Ansichten basierend auf einer Zwei-Photonen-Synthetischen-Apertur-Mikroskopie unter Verwendung von Kleinapertur-Anregungslichtstrahlen, die durch eine Apertur mit vorgegebener beugungsbegrenzter Größe beschränkt sind, und Erzeugen von Kleinapertur-Abbildungsergebnissen unterschiedlicher Ansichten, wobei die Zwei-Photonen-Synthetischen-Apertur-Mikroskopie dazu konfiguriert ist, eine Probenabbildung in einem Prozess des Synthetisierens großer Aperturen aus Teilaperturen zu realisieren;
Berechnen (S102), basierend auf den Kleinapertur-Abbildungsergebnissen, lateraler Verschiebungsvektoren, die bei Bildern verschiedener Teilaperturen durch Wellenfrontaberrationsphasen erzeugt werden, welche in einem Abbildungsprozess durch Systemaberration oder Gewebestreuung hervorgerufen werden, und Erhalten dreidimensionaler Probeninformationen, die vorgegebene Auflösungsbedingungen erfüllen; und
Kompensieren (S103) optischer Aberration gemäß den lateralen Verschiebungsvektoren in einem Prozess des Erhaltens dreidimensionaler Rekonstruktionsergebnisse basierend auf den dreidimensionalen Probeninformationen,
wobei das Berechnen (S102), basierend auf den Kleinapertur-Abbildungsergebnissen, lateraler Verschiebungsvektoren, die bei Bildern verschiedener Teilaperturen durch Wellenfrontaberrationsphasen erzeugt werden, welche in einem Abbildungsprozess durch Systemaberration oder Gewebestreuung hervorgerufen werden, umfasst:
Durchführen einer Faltungsoperation an den Kleinapertur-Abbildungsergebnissen und einer Abbildungs-Punktspreizfunktion, um eine Vorwärtsprojektion *P*(*x*, *y*) einer ursprünglichen Messansicht zu erhalten;
Durchführen einer Korrelationsberechnung an der Vorwärtsprojektion und ursprünglichen Messdaten *M*(*x*, *y*) , um eine Korrelationsmatrix zu erhalten, wobei ein Maximalwert der Korrelationsmatrix eine Koordinate einer Position maximaler Korrelation ist und ein Abstand von Koordinaten, die von einer zentralen Position abweichen, (Shift *x*, Shift *y*) ist; und
Erhalten der lateralen Verschiebungsvektoren ${S}_{x , y}^{X}$ und ${S}_{x , y}^{Y}$, wobei ${S}_{x , y}^{X}$ ein Verschiebungsvektor jedes Kleinaperturbildes auf einer X-Achse des Bildes ist und ${S}_{x , y}^{Y}$ ein Verschiebungsvektor jedes Kleinaperturbildes auf einer Y-Achse des Bildes ist.

2. Verfahren nach Anspruch 1, wobei das Kompensieren (S103) optischer Aberration gemäß den lateralen Verschiebungsvektoren in dem Prozess des Erhaltens dreidimensionaler Rekonstruktionsergebnisse basierend auf den dreidimensionalen Probeninformationen umfasst: Anwenden der durch die lateralen Verschiebungsvektoren bestimmten Wellenfrontaberrationsphasen auf die Erzeugung einer System-Punktspreizfunktion in einem vorgegebenen dreidimensionalen Rekonstruktionsalgorithmus.

3. Verfahren nach Anspruch 2, wobei eine Ableitungsfunktion der lateralen Verschiebungsvektoren und der Wellenfrontaberrationsphasen die folgende Beziehung erfüllt: $Δϕ = \frac{\partial ϕ}{\partial x} i + \frac{\partial ϕ}{\partial y} j = {S}_{x , y}^{X} i + {S}_{x , y}^{Y} j$ wobei *Δϕ* eine Aberrationsphasenvariation ist und *ϕ*(*x*, *y*) eine Wellenfrontfunktion des einfallenden Lichts nach der Aberration ist.

4. Verfahren nach Anspruch 1, wobei das Kompensieren (S103) optischer Aberration gemäß den lateralen Verschiebungsvektoren in dem Prozess des Erhaltens dreidimensionaler Rekonstruktionsergebnisse basierend auf den dreidimensionalen Probeninformationen umfasst: Kompensieren der lateralen Verschiebungsvektoren in dem vorgegebenen dreidimensionalen Rekonstruktionsalgorithmus und anschließendes Durchführen der dreidimensionalen Rekonstruktion.

5. Vorrichtung (10) der digitalen adaptiven Optik zur Mehrphotonen-Bildgebung, umfassend:
ein Erfassungsmodul (100), das dazu konfiguriert ist, dreidimensionale Probenprojektionen unterschiedlicher Ansichten basierend auf einer Zwei-Photonen-Synthetischen-Apertur-Mikroskopie unter Verwendung von Kleinapertur-Anregungslichtstrahlen zu erfassen, die durch eine Apertur mit vorgegebener beugungsbegrenzter Größe beschränkt sind, und Kleinapertur-Abbildungsergebnisse unterschiedlicher Ansichten zu erzeugen, wobei die Zwei-Photonen-Synthetischen-Apertur-Mikroskopie dazu konfiguriert ist, eine Probenabbildung in einem Prozess des Synthetisierens großer Aperturen aus Teilaperturen zu realisieren;
ein Berechnungsmodul (200), das dazu konfiguriert ist, basierend auf den Kleinapertur-Abbildungsergebnissen laterale Verschiebungsvektoren zu berechnen, die bei Bildern verschiedener Teilaperturen durch Wellenfrontaberrationsphasen erzeugt werden, welche in einem Abbildungsprozess durch Systemaberration oder Gewebestreuung hervorgerufen werden, und dreidimensionale Probeninformationen zu erhalten, die vorgegebene Auflösungsbedingungen erfüllen; und
ein Abbildungsmodul (300), das dazu konfiguriert ist, optische Aberration gemäß den lateralen Verschiebungsvektoren in einem Prozess des Erhaltens dreidimensionaler Rekonstruktionsergebnisse basierend auf den dreidimensionalen Probeninformationen zu kompensieren,
wobei das Berechnungsmodul (200) ferner zu Folgendem konfiguriert ist:
Durchführen einer Faltungsoperation an den Kleinapertur-Abbildungsergebnissen und einer Abbildungs-Punktspreizfunktion, um eine Vorwärtsprojektion P(x,y) einer ursprünglichen Messansicht zu erhalten;
Durchführen einer Korrelationsberechnung an der Vorwärtsprojektion und ursprünglichen Messdaten *M*(*x, y*), um eine Korrelationsmatrix zu erhalten, wobei ein Maximalwert der Korrelationsmatrix eine Koordinate einer Position maximaler Korrelation ist und ein Abstand von Koordinaten, die von einer zentralen Position abweichen, (Shift *x*, Shift *y*) ist; und
Erhalten der lateralen Verschiebungsvektoren ${S}_{x , y}^{X}$ und ${S}_{x , y}^{Y}$ , wobei ${S}_{x , y}^{X}$ ein Verschiebungsvektor jedes Kleinaperturbildes auf einer X-Achse des Bildes ist und ${S}_{x , y}^{Y}$ ein Verschiebungsvektor jedes Kleinaperturbildes auf einer Y-Achse des Bildes ist.

6. Vorrichtung (10) nach Anspruch 5, wobei das Abbildungsmodul (300) umfasst:
eine Korrektureinheit, die dazu konfiguriert ist, die durch die lateralen Verschiebungsvektoren bestimmten Wellenfrontaberrationsphasen auf die Erzeugung einer System-Punktspreizfunktion in einem vorgegebenen dreidimensionalen Rekonstruktionsalgorithmus anzuwenden.

7. Vorrichtung (10) nach Anspruch 6, wobei eine Ableitungsfunktion der lateralen Verschiebungsvektoren und der Wellenfrontaberrationsphasen die folgende Beziehung erfüllt: $Δϕ = \frac{\partial ϕ}{\partial x} i + \frac{\partial ϕ}{\partial y} j = {S}_{x , y}^{X} i + {S}_{x , y}^{Y} j$ wobei *Δϕ* eine Aberrationsphasenvariation ist und *ϕ*(x, y) eine Wellenfrontfunktion des einfallenden Lichts nach der Aberration ist.

8. Vorrichtung (10) nach Anspruch 5, wobei das Abbildungsmodul (300) umfasst:
eine Kompensationseinheit, die dazu konfiguriert ist, die lateralen Verschiebungsvektoren in dem vorgegebenen dreidimensionalen Rekonstruktionsalgorithmus zu kompensieren und anschließend die dreidimensionale Rekonstruktion durchzuführen.

9. Elektronische Vorrichtung für eine Vorrichtung nach einem der Ansprüche 5 bis 8, umfassend: einen Speicher (901), einen Prozessor (902) und ein Computerprogramm, das in dem Speicher (901) gespeichert ist und von dem Prozessor (902) ausgeführt wird, wobei der Prozessor (902) das Programm ausführt, um das Verfahren der digitalen adaptiven Optik zur Mehrphotonen-Bildgebung nach einem der Ansprüche 1 bis 4 zu implementieren.

10. Computerlesbares Speichermedium, das ein Computerprogramm speichert, wobei das Programm von dem Prozessor einer elektronischen Vorrichtung nach Anspruch 9 ausgeführt wird, um das Verfahren der digitalen adaptiven Optik zur Mehrphotonen-Bildgebung nach einem der Ansprüche 1 bis 4 zu implementieren.

## Revendications

1. Un procédé d'optique adaptative numérique pour l'imagerie multiphotonique, comprenant :
l'acquisition (S101) d'une projection tridimensionnelle d'échantillon de différentes vues sur la base d'une microscopie à ouverture synthétique à deux photons en utilisant des faisceaux de lumière d'excitation à petite ouverture contraints par une ouverture de taille limite de diffraction prédéfinie, et la génération de résultats d'imagerie à petite ouverture de différentes vues, dans lequel la microscopie à ouverture synthétique à deux photons est configurée pour réaliser l'imagerie d'échantillon dans un processus de synthèse de grandes ouvertures à partir de sous-ouvertures ;
le calcul (S102), sur la base des résultats d'imagerie à petite ouverture, de vecteurs de décalage latéral produits par des images de différentes sous-ouvertures causés par des phases d'aberration de front d'onde entraînées par l'aberration du système ou la diffusion tissulaire dans un processus d'imagerie, et l'acquisition d'informations tridimensionnelles d'échantillon qui satisfont à des conditions de résolution prédéfinies ; et
la compensation (S103) de l'aberration optique selon les vecteurs de décalage latéral dans un processus d'obtention de résultats de reconstruction tridimensionnelle sur la base des informations tridimensionnelles d'échantillon,
dans lequel le calcul (S102), sur la base des résultats d'imagerie à petite ouverture, de vecteurs de décalage latéral produits par des images de différentes sous-ouvertures causés par des phases d'aberration de front d'onde entraînées par l'aberration du système ou la diffusion tissulaire dans un processus d'imagerie comprend : l'exécution d'une opération de convolution sur les résultats d'imagerie à petite ouverture et une fonction d'étalement du point d'imagerie pour obtenir une projection avant P(x, y) d'une vue de mesure originale ; l'exécution d'un calcul de corrélation sur la projection avant et des données de mesure originales M(x, y) pour obtenir une matrice de corrélation, dans lequel une valeur maximale de la matrice de corrélation est une coordonnée d'une position de corrélation maximale, et une distance de coordonnées s'écartant d'une position centrale est (Décalage x, Décalage y) ; et
l'obtention des vecteurs de décalage latéral ${S}_{x , y}^{X}$ et ${S}_{x , y}^{X} , {S}_{x , y}^{X}$ étant un vecteur de décalage de chaque image à petite ouverture sur un axe X de l'image, et ${S}_{x , y}^{X}$ étant un vecteur de décalage de chaque image à petite ouverture sur un axe Y de l'image.

2. Le procédé selon la revendication 1, dans lequel la compensation (S103) de l'aberration optique selon les vecteurs de décalage latéral dans le processus d'obtention de résultats de reconstruction tridimensionnelle sur la base des informations tridimensionnelles d'échantillon comprend : l'application des phases d'aberration de front d'onde déterminées par les vecteurs de décalage latéral à la génération d'une fonction d'étalement du point du système dans un algorithme de reconstruction tridimensionnelle prédéfini.

3. Le procédé selon la revendication 2, dans lequel une fonction dérivée des vecteurs de décalage latéral et des phases d'aberration de front d'onde satisfait à la relation suivante : $Δϕ = \frac{\partial ϕ}{\partial x} i + \frac{\partial ϕ}{\partial y} j = {S}_{x , y}^{X} i + {S}_{x , y}^{Y} j$ dans lequel Δ*Φ* est une variation de phase d'aberration ; *Φ*(x, y) est une fonction de front d'onde de lumière incidente après aberration

4. Le procédé selon la revendication 1, dans lequel la compensation (S103) de l'aberration optique selon les vecteurs de décalage latéral dans le processus d'obtention de résultats de reconstruction tridimensionnelle sur la base des informations tridimensionnelles d'échantillon comprend : la compensation des vecteurs de décalage latéral dans l'algorithme de reconstruction tridimensionnelle prédéfini, et ensuite l'exécution de la reconstruction tridimensionnelle.

5. Un dispositif d'optique adaptative numérique (10) pour l'imagerie multiphotonique, comprenant :
un module d'acquisition (100) configuré pour acquérir une projection tridimensionnelle d'échantillon de différentes vues sur la base d'une microscopie à ouverture synthétique à deux photons en utilisant des faisceaux de lumière d'excitation à petite ouverture contraints par une ouverture de taille limite de diffraction prédéfinie, et générer des résultats d'imagerie à petite ouverture de différentes vues, dans lequel la microscopie à ouverture synthétique à deux photons est configurée pour réaliser l'imagerie d'échantillon dans un processus de synthèse de grandes ouvertures à partir de sous-ouvertures ;
un module de calcul (200) configuré pour calculer, sur la base des résultats d'imagerie à petite ouverture, des vecteurs de décalage latéral produits par des images de différentes sous-ouvertures causés par des phases d'aberration de front d'onde entraînées par l'aberration du système ou la diffusion tissulaire dans un processus d'imagerie, et acquérir des informations tridimensionnelles d'échantillon qui satisfont à des conditions de résolution prédéfinies ; et
un module d'imagerie (300) configuré pour compenser l'aberration optique selon les vecteurs de décalage latéral dans un processus d'obtention de résultats de reconstruction tridimensionnelle sur la base des informations tridimensionnelles d'échantillon,
dans lequel le module de calcul (200) est en outre configuré pour :
exécuter une opération de convolution sur les résultats d'imagerie à petite ouverture et une fonction d'étalement d'imagerie pour obtenir une projection avant P(x, y) d'une vue de mesure originale ;
exécuter un calcul de corrélation sur la projection avant et des données de mesure originales M(x, y) pour obtenir une matrice de corrélation, dans lequel une valeur maximale de la matrice de corrélation est une coordonnée d'une position de corrélation maximale, et une distance de coordonnées s'écartant d'une position centrale est (Décalage x, Décalage y) ; et
obtenir les vecteurs de décalage latéral ${S}_{x , y}^{X}$ et ${S}_{x , y}^{X} , {S}_{x , y}^{X}$ étant un vecteur de décalage de chaque image à petite ouverture sur un axe X de l'image, et ${S}_{x , y}^{X}$ étant un vecteur de décalage de chaque image à petite ouverture sur un axe Y de l'image.

6. Le dispositif (10) selon la revendication 5, dans lequel le module d'imagerie (300) comprend : une unité de correction configurée pour appliquer les phases d'aberration de front d'onde déterminées par les vecteurs de décalage latéral à la génération d'une fonction d'étalement du point du système dans un algorithme de reconstruction tridimensionnelle prédéfini.

7. Le dispositif (10) selon la revendication 6, dans lequel une fonction dérivée des vecteurs de décalage latéral et des phases d'aberration de front d'onde satisfait à la relation suivante : $Δϕ = \frac{\partial ϕ}{\partial x} i + \frac{\partial ϕ}{\partial y} j = {S}_{x , y}^{X} i + {S}_{x , y}^{Y} j$ dans lequel Δ*Φ* est une variation de phase d'aberration ; *Φ*(x,y) est une fonction de front d'onde de lumière incidente après aberration

8. Le dispositif (10) selon la revendication 5, dans lequel le module d'imagerie (300) comprend : une unité de compensation configurée pour compenser les vecteurs de décalage latéral dans l'algorithme de reconstruction tridimensionnelle prédéfini, et ensuite exécuter la reconstruction tridimensionnelle.

9. Un appareil électronique pour un dispositif selon les revendications 5 à 8, comprenant : une mémoire (901), un processeur (902), et un programme informatique stocké dans la mémoire (901) et exécuté dans le processeur (902), dans lequel le processeur (902) exécute le programme pour mettre en œuvre le procédé d'optique adaptative numérique pour l'imagerie multiphotonique selon l'une quelconque des revendications 1 à 4.

10. Un support de stockage lisible par ordinateur, stockant un programme informatique, dans lequel le programme est exécuté par le processeur d'un dispositif électronique de la revendication 9 pour mettre en œuvre le procédé d'optique adaptative numérique pour l'imagerie multiphotonique selon l'une quelconque des revendications 1 à 4.
